# EUROPÄISCHE PATENTSCHRIFT

(11) **EP 3 356 139 B1**
(45) Veröffentlichungstag und Bekanntmachung des Hinweises auf die Patenterteilung: **17.07.2024**
(21) Anmeldenummer: 16775232.8
(22) Anmeldetag: 29.09.2016
(51) Int. Cl.: B32B 17/10

(54) **VERBUNDGLAS MIT DÜNNER INNENSCHEIBE UND SCHALLDÄMPFENDER THERMOPLASTISCHER ZWISCHENSCHICHT**
LAMINATED GLASS WITH THIN INNER PANE AND SOUND-ABSORBING THERMOPLASTIC INTERLAYER
VERRE FEUILLETÉ AVEC VITRE INTÉRIEURE MINCE ET COUCHE INTERMÉDIAIRE THERMOPLASTIQUE ACOUSTIQUEMENT ABSORBANTE

(30) Priorität: 01.10.2015 EP 15187851
(43) Veröffentlichungstag der Anmeldung: 08.08.2018
(73) Patentinhaber: SAINT-GOBAIN GLASS FRANCE, 92400 Courbevoie (FR)
(72) Erfinder: AJDARI, Armand, 75014 Paris (FR); LINNHÖFER, Dieter, 60280 Margny les Compiègne (FR); KREBS, Benjamin, 44797 Bochum (DE)
(74) Vertreter: Gebauer, Dieter Edmund
(86) Internationale Anmeldenummer: PCT/EP2016/073291
(87) Internationale Veröffentlichungsnummer: WO 2017/055470

(56) Entgegenhaltungen:
- EP-A1- 1 800 855
- EP-A1- 1 958 764
- WO-A1-2014/126251
- WO-A1-2015/122507
- WO-A1-2015/134836
- US-A1- 2013 295 357

## Beschreibung

Die Erfindung betrifft ein Verbundglas mit einer dünnen Innenscheibe und schalldämpfender thermoplastischer Zwischenschicht, ein Verfahren zu deren Herstellung und deren Verwendung.

Verbundgläser sind als Verglasungen im Fahrzeugbereich hinlänglich bekannt. Sie bestehen üblicherweise aus zwei Glasscheiben mit einer Dicke von 2 mm bis 3 mm, welche mittels einer thermoplastischen Zwischenschicht miteinander verbunden sind. Solche Verbundgläser werden insbesondere als Windschutzscheiben und Dachscheiben, zunehmend aber auch als Seitenscheiben und Heckscheiben eingesetzt.

Aktuell ist die Fahrzeugindustrie bemüht, das Gewicht der Fahrzeuge zu reduzieren, was mit einem reduzierten Treibstoffverbrauch einhergeht. Einen bedeutenden Beitrag hierzu kann eine Reduzierung des Gewichts der Verglasungen leisten, was insbesondere durch verringerte Scheibendicken zu erreichen ist. Solche dünnen Scheiben weisen insbesondere Dicken kleiner als 2 mm auf. Trotz der verringerten Scheibendicken müssen jedoch die Anforderungen an Stabilität und Bruchfestigkeit der Scheiben gewährleistet sein.

Es war bisher eine gängige Meinung, dass zur Gewährleistung einer hinreichenden Stabilität und Bruchfestigkeit beide Scheiben des Verbundglases eine gewisse Mindestdicke nicht unterschreiten dürfen. Die US 2013/0295357 A1 beispielsweise offenbart ein Verbundglas für Fahrzeuge mit einer dünnen Innenscheibe. Das Verbundglas besteht aus einer Außenscheibe mit einer Dicke von 1,5 mm bis 3,0 mm, beispielsweise 1,6 mm, und einer chemisch vorgespannten Innenscheibe mit einer Dicke von 0,5 mm bis 1,5 mm, beispielsweise 0,7 mm. Verbundgläser mit dünneren Innenscheiben werden offenbar als nicht hinreichend stabil angesehen, um die Sicherheitsanforderungen im Fahrzeugbereich zu gewährleisten.

Die akustische Dämpfung von Verbundglas ist im Wesentlichen von den eingesetzten Scheibendicken abhängig. Mit sinkender Scheibendicke erfolgt somit eine Verschlechterung der akustischen Eigenschaften der Verglasung. Da ein Großteil der Lärmbelastung im Fahrzeug über die Verglasung, insbesondere über die Windschutzscheibe, eintritt, ist es wünschenswert auch bei geringen Scheibendicken eine gute akustische Dämpfung der Verglasung zu erreichen.

WO 2015/122507 A1 zeigt eine Verbundscheibe mit einer akustisch dämpfenden Zwischenschicht.

Der Erfindung liegt die Aufgabe zugrunde, ein Verbundglas mit weiter verringerter Dicke und guten akustischen Eigenschaften bereitzustellen, das eine hinreichende Stabilität und Bruchfestigkeit aufweist, um im Fahrzeugbereich eingesetzt werden zu können.

Die Aufgabe der vorliegenden Erfindung wird erfindungsgemäß durch ein Verbundglas, ein Verfahren zu dessen Herstellung und dessen Verwendung gemäß den unabhängigen Ansprüchen gelöst. Bevorzugte Ausführungen gehen aus den Unteransprüchen hervor.

Das erfindungsgemäße Verbundglas ist ein Verbundglas für Fahrzeuge (Fahrzeug-Verbundglas). Das Verbundglas ist dafür vorgesehen, in einer Fensteröffnung eines Fahrzeugs den Innenraum gegenüber der äußeren Umgebung abzutrennen.

Das erfindungsgemäße Verbundglas (oder Verbundscheibe) umfasst mindestens eine Innenscheibe, eine Außenscheibe und eine thermoplastische Zwischenschicht, welche die Innenscheibe mit der Außenscheibe verbindet. Die Innenscheibe und die Außenscheibe bestehen aus Glas.

Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die Innenscheibe und die Außenscheibe sind durch eine akustisch dämpfende Zwischenschicht verbunden. Die akustisch dämpfende Zwischenschicht umfasst mindestens zwei äußere polymere Schichten und mindestens eine zwischen diesen liegende innere polymere Schicht, wobei die innere polymere Schicht eine größere Plastizität oder Elastizität aufweist als die äußeren polymeren Schichten. Dadurch ergibt sich eine akustisch dämpfende Zwischenschicht, die einen weichen Kern besitzt, während die Steifigkeit des Schichtaufbaus vom Kern zum Rand hin zunimmt. Die innere polymere Schicht weist eine Dicke von 0,05 mm bis 0,40 mm auf und die äußeren polymeren Schichten weisen eine Dicke von 0,20 mm bis 0,60 mm auf, wobei die Gesamtdicke der akustisch dämpfenden Zwischenschicht mindestens 0,70 mm beträgt.

Die erste äußere polymere Schicht grenzt unmittelbar an die Außenscheibe, während die zweite äußere polymere Schicht unmittelbar an die Innenscheibe grenzt. Zwischen diesen äußeren polymeren Schichten befindet sich die innere polymere Schicht, die unmittelbar an die erste äußere polymere Schicht und die zweite äußere polymere Schicht grenzt.

Es hat sich gezeigt, dass ein Verbundglas mit den erfindungsgemäßen Dicken für die Au-ßenscheibe, die Innenscheibe und die akustisch dämpfende Zwischenschicht eine überraschend hohe Stabilität und Bruchfestigkeit, insbesondere Kratzfestigkeit und Steinschlagfestigkeit aufweist. Die Innenscheibe kann also eine deutlich geringere Dicke aufweisen als bislang allgemein angenommen. Die Stabilität und Bruchfestigkeit des Verbundglases wird einerseits durch die erfindungsgemäße Auswahl der Dicke der Außenscheibe und die ausgeprägte Asymmetrie der Außen- und der Innenscheibe im Hinblick auf die Dicke bewirkt. Darüber hinaus liefert auch die akustisch dämpfende Zwischenschicht einen entscheidenden Beitrag zur Stabilität der Scheibe.

Die erfindungsgemäßen Schichtdicken der polymeren Schichten ergeben eine akustisch dämpfende Zwischenschicht, die nicht nur die Lärmbelastung im Fahrzeug senkt, sondern auch stabilisierend hinsichtlich des gesamten Verbundglases wirken. Die innere polymere Schicht mit höherer Elastizität ist dabei vor allem für die akustische Dämpfung verantwortlich, während die äußeren polymeren Schichten niedrigerer Elastizität maßgeblich zur Stabilisierung der Scheibe beitragen.

Der weiche Kern der akustisch dämpfenden Zwischenschicht (innere polymere Schicht höherer Elastizität) ist des Weiteren auch vorteilhaft im Hinblick auf einen Ausgleich möglicher Spannungen im Glas. Aufgrund der sehr geringen Dicke der Innenscheibe muss diese nicht zwangsläufig vorgebogen werden, sondern passt sich beim Laminiervorgang der Biegung der Außenscheibe an. Die dadurch in der Innenscheibe entstehenden Spannungen können durch die höhere Elastizität der inneren polymeren Schicht und die Schichtdicke der akustisch dämpfenden Zwischenschicht ausgeglichen werden.

Der Stabilisierungseffekt der akustisch dämpfenden Zwischenschicht ist für den Fachmann unerwartet und überraschend. Durch den Ausgleich von Spannungen und den Beitrag zur Steifigkeit erleichtert die akustisch dämpfende Zwischenschicht wesentlich die Bereitstellung stark asymmetrischer Dickenkombinationen von Außen- und Innenscheibe.

Überraschend erfüllt das erfindungsgemäße Verbundglas die hohen Sicherheitsanforderungen im Fahrzeugbereich. Diese Anforderungen werden typischerweise durch standardisierte Bruch-, Schlag und Kratztests überprüft.

Die erfindungsgemäße ausgeprägte Asymmetrie von Außenscheibe und Innenscheibe ist besonders vorteilhaft im Hinblick auf die Festigkeit des Verbundglases.

Das erfindungsgemäße Verbundglas ist besonders bevorzugt eine Windschutzscheibe eines Kraftfahrzeugs.

In einer bevorzugten Ausführungsform betragen der Dämpfungsfaktor η₁ der ersten Mode und der Dämpfungsfaktor η₂ der zweiten Mode einer Verbundglasscheibe mit einer Oberfläche von 25 mm x 300 mm bestehend aus zwei Glasscheiben mit einer Dicke von jeweils 2,1 mm, zwischen denen die akustisch dämpfende Zwischenschicht laminiert ist, bei einer mechanischen Impedanzmessung (MIM) gemäß ISO 16940 bei einer Temperatur von 20°C η₁ ≥ 0,20 und η₂ ≥ 0,25, bevorzugt η₁ ≥ 0,25 und η₂ ≥ 0,30, besonders bevorzugt η₁ ≥ 0,25 und η₂ ≥ 0,35. Hierbei ist die Zwischenschicht durch geeignete Wahl der Schichtdicken und Elastizitäten bzw. Plastizitäten der inneren polymeren Schicht und äußeren polymeren Schichten so ausgebildet, dass die genannten Dämpfungsfaktoren η₁ und η₂ realisiert sind. Die akustischen Eigenschaften der akustisch dämpfenden Zwischenschicht werden bevorzugt über eine sogenannte mechanische Impedanzmessung (MIM, *mechnanical impedance measurement*) bestimmt. Dabei handelt es sich um ein standardisiertes Verfahren, nachzulesen in ISO 16940, aus dem sich durch Messung der Eigenfrequenzen die Dämpfung berechnen lässt. Gemäß Standard wird die zu untersuchende akustisch dämpfende Zwischenschicht zwischen zwei Glasscheiben der Dicke 2,1 mm laminiert um eine entsprechende Vergleichbarkeit bei unterschiedlichen Glasdicken zu ermöglichen. Dem Fachmann wird somit die Auswahl geeigneter Zwischenschichten anhand eines wohlbekannten standardisierten Messverfahrens ermöglicht.

Die mechanische Impedanzmessung wird frühestens einen Monat nach Herstellung des Verbundglases durchgeführt. Ferner wird die Zwischenschicht selbst frühestens einen Monat nach ihrer Herstellung mit den beiden Glasscheiben von 2,1 mm Dicke zu einem Verbundglas laminiert. Dadurch wird sichergestellt, dass sich zum Zeitpunkt der Messung ein stabiler Zustand ausgebildet hat.

Erfindungsgemäß weist die Innenscheibe eine Dicke von 0,2 mm bis 0,3 mm, besonders bevorzugt von ungefähr 0,3 mm auf. Damit werden besonders gute Ergebnisse erzielt im Hinblick auf ein geringeres Gewicht des Verbundglases bei hoher Stabilität und Bruchfestigkeit.

Erfindungsgemäß weist die Außenscheibe eine Dicke von 1,6 mm bis 2,1 mm auf, besonders bevorzugt 1,8 mm bis 2,0 mm, ganz besonders bevorzugt 1,8 mm. Das ist besonders vorteilhaft einerseits im Hinblick auf ein geringes Gewicht der Verbundscheibe, wobei die Dicke andererseits groß genug ist, um eine ausreichende Dickenasymmetrie zwischen Außenscheibe und Innenscheibe zu gewährleisten, die wiederum eine hohe Stabilität bewirkt.

Die nachfolgende Tabelle zeigt Dickenkombinationen der Außenscheibe und Innenscheibe, die sich hinsichtlich der Stabilität und Bruchfestigkeit der Verbundglasscheibe als vorteilhaft erwiesen haben, wobei in allen Beispielen die äußeren polymeren Schichten der akustisch dämpfenden Zwischenschicht eine Dicke von jeweils 0,35 mm besitzen und die innere polymere Schicht der akustisch dämpfenden Zwischenschicht eine Dicke von 0,15 mm aufweist.

| **Dicke Außenscheibe** | **Dicke Innenscheibe** |
|---|---|
| 1,8 mm | 0,3 mm |
| 1,6 mm | 0,2 mm |
| 2,1 mm | 0,4 mm |

Die äußeren polymeren Schichten und die innere polymere Schicht enthalten zumindest Polyvinylbutyral (PVB), Ethylenvinylacetat (EVA), Polyurethan (PU) oder Gemische oder Copolymere oder Derivate davon, die sich für Verbundgläser bewährt haben.

In einer bevorzugten Ausführungsform enthalten die äußeren polymeren Schichten und die innere polymere Schicht Polyvinylbutyral und Weichmacher. Die Auswahl des Weichmachers und der Acetalisierungsgrad des Polyvinylbutyrals ermöglichen es in einer dem Fachmann bekannten Weise die Elastizität der polymeren Schichten zu beeinflussen.

Die innere polymere Schicht weist bevorzugt eine Dicke von 0,07 mm bis 0,30 mm, besonders bevorzugt von 0,10 mm bis 0,20 mm, ganz besonders bevorzugt von etwa 0,15 mm auf, während die äußeren polymeren Schichten eine Dicke von 0,30 mm bis 0,40 mm, besonders bevorzugt von etwa 0,35 mm aufweisen. Dabei besitzen die äußeren polymeren Schichten in einer bevorzugten Ausgestaltung der Erfindung die gleiche Dicke. Alternativ können die äußeren polymeren Schichten sich in ihrer Dicke auch voneinander unterscheiden. Durch die bevorzugten Schichtdicken der inneren polymeren Schicht und der äußeren polymeren Schichten kann in Verbindung mit einer entsprechenden Auswahl der Elastizitäten bzw. Plastizitäten der äußeren polymeren Schichten und inneren polymeren Schicht, wobei die die äußeren polymeren Schichten eine niedrigere Elastizität oder Plastizität als die innere polymere Schicht aufweisen, erreicht werden, dass der Dämpfungsfaktor η₁ der ersten Mode und der Dämpfungsfaktor η₂ der zweiten Mode einer Verbundglasscheibe mit einer Oberfläche von 25 mm x 300 mm bestehend aus zwei Glasscheiben mit einer Dicke von jeweils 2,1 mm, zwischen denen die akustisch dämpfende Zwischenschicht laminiert ist, bei einer mechanischen Impedanzmessung (MIM) gemäß ISO 16940 bei einer Temperatur von 20°C η₁ ≥ 0,20 und η₂ ≥ 0,25, bevorzugt η₁ ≥ 0,25 und η₂ ≥ 0,30, besonders bevorzugt η₁ ≥ 0,25 und η₂ ≥ 0,35, beträgt.

Erfindungsgemäß ist die Innenscheibe eine chemisch vorgespannte Scheibe. Durch die Vorspannung kann die Innenscheibe mit einer besonderen Bruchstabilität und Kratzfestigkeit versehen werden. Für eine sehr dünne Glasscheibe, wie sie erfindungsgemäß als Innenscheibe vorgesehen ist, ist das chemische Vorspannen dabei besser geeignet als das thermische Vorspannen. Da thermisches Vorspannen auf einer Temperaturdifferenz zwischen einer Oberflächenzone und einer Kernzone beruht, setzt thermisches Vorspannen eine Mindestdicke der Glasscheibe voraus. Hinreichende Spannungen können typischerweise mit handelsüblichen thermischen Vorspannvorrichtungen bei Glasdicken ab etwa 2,5 mm erreicht werden. Bei geringeren Glasdicken können in der Regel nicht die allgemein geforderten Werte für die Vorspannung erreicht werden (vgl. beispielsweise die ECE-Regelung 43). Beim chemischen Vorspannen wird durch lonenaustausch die chemische Zusammensetzung des Glases im Bereich der Oberfläche verändert, wobei der lonenaustausch durch Diffusion auf eine Oberflächenzone beschränkt ist. Chemisches Vorspannen ist daher besonders für dünne Scheiben geeignet.Für das chemische Vorspannen sind auch die Bezeichnungen chemisches Tempern, chemisches Härten oder chemisches Verfestigen gebräuchlich.

Die Stabilität der ersten Scheibe kann durch geeignete Werte und lokale Verteilungen der Spannungen, welche durch die Einlagerung von Ionen beim chemischen Vorspannen erzeugt werden, verbessert werden.

Die chemisch vorgespannte Innenscheibe weist bevorzugt eine Oberflächendruckspannung von größer als 100 MPa, bevorzugt größer als 250 MPa und besonders bevorzugt größer 350 MPa auf.

Die Druckspannungstiefe der Scheibe beträgt insbesondere mindestens ein Zehntel ihrer Dicke, bevorzugt mindestens ein Sechstel ihrer Dicke, beispielsweise etwa ein Fünftel der Dicke der Innenscheibe. Das ist vorteilhaft im Hinblick auf die Bruchfestigkeit der Scheibe einerseits und einen wenig zeitintensiven Vorspannprozess andererseits. Mit Druckspannungstiefe wird im Sinne der Erfindung die Tiefe gemessen von der Oberfläche der Scheibe bezeichnet, bis zu der die Scheibe Druckspannungen mit einem Betrag größer 0 MPa steht. Weist die Innenscheibe beispielsweise eine Dicke von 0,3 mm auf, so beträgt die Druckspannungstiefe der Innenscheibe bevorzugt größer als 30 µm, besonders bevorzugt größer als 50 µm, ganz besonders bevorzugt zwischen 100 µm und 150 µm.

Es hat sich jedoch überraschend gezeigt, dass bestimmte chemische Zusammensetzungen der Innenscheibe besonders dazu geeignet sind, einem chemischen Vorspannen unterzogen zu werden. Dies äußert sich in einer hohen Geschwindigkeit des Diffusionsprozesses, was zu einem vorteilhaft geringen Zeitaufwand für den Vorspannprozess führt, und großen Vorspanntiefen (Druckspannungstiefen), was zu stabilen und bruchfesten Gläsern führt. Diese Zusammensetzungen sind im Sinne der Erfindung bevorzugt.

Die Innenscheibe enthält ein Aluminosilikatglas. Die Innenscheibe enthält bevorzugt von 50 Gew-% bis 85 Gew-% Siliziumoxid (SiO₂), von 3 Gew-% bis 10 Gew-% Aluminiumoxid (Al₂O₃), von 8 Gew-% bis 18 Gew-% Natriumoxid (Na₂O), von 5 Gew-% bis 15 Gew-% Kaliumoxid (K₂O), von 4 Gew-% bis 14 Gew-% Magnesiumoxid (MgO), von 0 Gew-% bis 10 Gew-% Kalziumoxid (CaO) und von 0 Gew-% bis 15 Gew-% Boroxid (B₂O₃). Die Innenscheibe kann außerdem weitere Bestandteile und Verunreinigungen enthalten. Die Innenscheibe enthält besonders bevorzugt zumindest von 55 Gew-% bis 72 Gew-% (ganz besonders bevorzugt von 57 Gew-% bis 65 Gew-%) Siliziumoxid (SiO₂), von 5 Gew-% bis 10 Gew-% (ganz besonders bevorzugt von 7 Gew-% bis 9 Gew-%) Aluminiumoxid (Al₂O₃), von 10 Gew-% bis 15 Gew-% (ganz besonders bevorzugt von 12 Gew-% bis 14 Gew-%) Natriumoxid (Na₂O), von 7 Gew-% bis 12 Gew-% (ganz besonders bevorzugt von 8,5 Gew-% bis 10,5 Gew-%) Kaliumoxid (K₂O) und von 6 Gew-% bis 11 Gew-% (ganz besonders bevorzugt von 7,5 Gew-% bis 9,5 Gew-%) Magnesiumoxid (MgO).

Diese bevorzugten Glaszusammensetzungen haben neben der Möglichkeit des chemischen Vorspannens einen weiteren überraschenden Vorteil. Solche Scheiben sind dazu geeignet, zusammen mit Scheiben aus herkömmlichem Kalk-Natron-Glas (auch Normalglas genannt) kongruent gebogen zu werden. Hierfür sind ähnliche thermische Eigenschaften verantwortlich, so dass die beiden Glasarten im gleichen Temperaturbereich biegbar werden, nämlich etwa von 450 °C bis 700 °C. Wie dem Fachmann hinreichend bekannt ist, eignen sich kongruent gebogene Scheiben aufgrund ihrer optimal aufeinander angepassten Form in besonderer Weise dazu, zu einem Verbundglas verbunden zu werden. Eine Innenscheibe mit den bevorzugten chemischen Zusammensetzungen ist also besonders geeignet, in einem Verbundglas mit einer Außenscheibe anderer Zusammensetzung, insbesondere aus Kalk-Natron-Glas, verwendet zu werden.

Erfindungsgemäß ist die Außenscheibe eine nicht-vorgespannte Scheibe. Die Außenscheibe kann Belastungen wie Steinschlag ausgesetzt sein. Trifft ein Stein, insbesondere ein kleiner, spitzer Stein auf eine Glasscheibe, so kann er deren Oberfläche durchdringen. Im Falle einer vorgespannten Scheibe kann der Stein so in die Zugspannungszone im Scheibeninneren eindringen, was zu einem Zerspringen der Scheibe führt. Eine nicht-vorgespannte Außenscheibe weißt eine breitere Druckspannungszone und geringere Zugspannung im Inneren auf und ist dadurch weniger anfällig gegenüber dem Einschlag eines spitzen Körpers. Eine nicht-vorgespannte Außenscheibe ist daher insgesamt sehr vorteilhaft im Hinblick auf die Sicherheit der Fahrzeuginsassen.

Erfindungsgemäß enthält die Außenscheibe Kalk-Natron-Glas. Kalk-Natron-Glas ist kostengünstig verfügbar und hat sich für Anwendungen im Fahrzeugbereich bewährt.

In einer besonders bevorzugten Ausgestaltung weist das Verbundglas keine weiteren Scheiben oder Polymerschichten auf, besteht also lediglich aus der Außenscheibe, der Innenscheibe und der akustisch dämpfenden Zwischenschicht.

Die Außenscheibe, die Innenscheibe und die akustisch dämpfende Zwischenschicht können klar und farblos, aber auch getönt oder gefärbt sein. Die Gesamttransmission durch das Verbundglas beträgt in einer bevorzugten Ausgestaltung größer 70%, insbesondere wenn das Verbundglas eine Windschutzscheibe ist. Der Begriff Gesamttransmission bezieht sich auf das durch ECE-R 43, Anhang 3, 9 9.1 festgelegte Verfahren zur Prüfung der Lichtdurchlässigkeit von Kraftfahrzeugscheiben.

Das Verbundglas ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Das Verbundglas kann aber auch plan sein, beispielsweise wenn es als Scheibe für Busse, Züge oder Traktoren vorgesehen ist.

Das erfindungsgemäße Verbundglas kann eine funktionelle Beschichtung aufweisen, beispielweise eine IR-reflektierende oder absorbierende Beschichtung, eine UV-reflektierende oder absorbierende Beschichtung, eine farbgebende Beschichtung, eine Beschichtung niedriger Emissivität, eine heizbare Beschichtung, eine Beschichtung mit Antennenfunktion, eine splitterbindende Beschichtung oder eine Beschichtung zur Abschirmung von elektromagnetischer Strahlung. Die funktionelle Beschichtung ist bevorzugt auf der Außenscheibe angeordnet. Die dickere Außenscheibe, die zudem bevorzugt aus Normalglas besteht, lässt sich technisch einfacher und kostengünstiger beschichten, beispielweise durch physikalische Gasphasenabscheidung (wie Sputtern) als die sehr dünne Innenscheibe. Insbesondere lässt sich eine Beschichtung und eine chemische Vorspannung technisch nur sehr schwierig kombinieren. Eine vor dem Vorspannen aufgebrachte Beschichtung stört den lonendiffusionsprozess beim chemischen Vorspannen. Ein Beschichten nach dem chemischen Vorspannen ändert aufgrund der typischen hohen Temperaturen die Spannungsverteilung in der Scheibe. Die funktionelle Beschichtung ist bevorzugt auf der zur akustisch dämpfenden Zwischenschicht hingewandten Oberfläche der Außenscheibe angeordnet, wo sie vor Korrosion und Beschädigung geschützt ist.

Das Verbundglas kann auch mit einer Zusatzfunktion versehen werden, indem zusätzlich oder alternativ zur funktionellen Beschichtung die Zwischenschicht funktionelle Einlagerungen aufweist, beispielsweise Einlagerungen mit IR-absorbierenden, UV-absorbierenden oder farbgebenden Eigenschaften. Die Einlagerungen sind beispielsweise organische oder anorganische Ionen, Verbindungen, Aggregate, Moleküle, Kristalle, Pigmente oder Farbstoffe.

Die Aufgabe der Erfindung wird weiter gelöst durch ein Verfahren zur Herstellung eines erfindungsgemäßen Verbundglases, wobei (a) die Innenscheibe, die akustisch dämpfende Zwischenschicht und die Außenscheibe in dieser Reihenfolge flächenmäßig übereinander angeordnet werden und (b) die Innenscheibe und die Außenscheibe durch Lamination miteinander verbunden werden.

Soll das Verbundglas gebogen sein, so wird zumindest die Außenscheibe vor der Lamination einem Biegeprozess unterzogen.

In einer Ausführung der Erfindung wird die Innenscheibe nicht vorgebogen. Die Innenscheibe weist eine folienartige Flexibilität auf und kann so an die vorgebogene Außenscheibe angepasst werden, ohne selbst vorgebogen werden zu müssen. Die Herstellung des Verbundglases wird so vereinfacht. Die akustisch dämpfende Zwischenschicht gleicht dabei aufgrund ihrer Dicke und der geringen Steifigkeit der inneren polymeren Schicht eventuell auftretende Spannungen besonders vorteilhaft aus. Die im Vergleich zur inneren polymeren Schicht steiferen äußeren polymeren Schichten führen hingegen zu einer erfindungsgemäßen Erhöhung der Festigkeit der Verbundscheibe.

In einer alternativen Ausführung kann die Innenscheibe ebenfalls einem Biegeprozess unterzogen werden. Dies ist insbesondere bei starken Biegungen in mehrere Richtungen des Raums (sogenannte dreidimensionale Biegungen) vorteilhaft.

Die Außenscheibe und die Innenscheibe können einzeln gebogen werden. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

In einer bevorzugten Ausführung wird die Innenscheibe mit einer chemischen Vorspannung versehen. Gegenfalls wird die Innenscheibe nach dem Biegen langsam abgekühlt. Ein zu schnelles Abkühlen erzeugt thermische Spannungen in der Scheibe, die beim späteren chemischen Tempern zu Formänderungen führen können. Die Abkühlrate beträgt bevorzugt bis zur Abkühlung auf eine Temperatur von 400 °C bevorzugt von 0,05 °C/sec bis 0,5 °C/sec, besonders bevorzugt von 0,1 °C/sec bis 0,3°C/sec. Durch ein derartig langsames Abkühlen können thermische Spannungen im Glas vermieden werden, welche insbesondere zu optischen Mängeln führen sowie zu einer negativen Beeinträchtigung der späteren chemischen Vorspannung. Es kann danach weiter abgekühlt werden, auch mit höheren Abkühlraten, weil unterhalb 400 °C die Gefahr der Erzeugung thermischen Spannungen gering ist.

Das chemische Vorspannen erfolgt bevorzugt bei einer Temperatur von 300 °C bis 600 °C, besonders bevorzugt von 400 °C bis 500 °C. Die Innenscheibe wird dabei mit einer Salzschmelze behandelt, beispielsweise in die Salzschmelze eingetaucht. Während der Behandlung werden insbesondere Natrium-Ionen des Glases durch größere Ionen, insbesondere größere Alkali-Ionen ausgetauscht, wobei die gewünschten OberflächenDruckspannungen entstehen. Die Salzschmelze ist bevorzugt die Schmelze eines Kaliumsalzes, besonders bevorzugt Kaliumnitrat (KNO₃) oder Kaliumsulfat (KSO₄), ganz besonders bevorzugt Kaliumnitrat (KNO₃).

Der lonenaustauch wird durch die Diffusion der Alkali-Ionen bestimmt. Die gewünschten Werte für die Oberflächen-Druckspannungen und Druckspannungstiefen können daher insbesondere durch die Temperatur und die Dauer des Vorspannprozesses eingestellt werden. Übliche Zeiten für die Dauer betragen von 2 Stunden bis 48 Stunden.

Nach der Behandlung mit der Salzschmelze wird die Scheibe auf Raumtemperatur abgekühlt. Anschließend wird die Scheibe gereinigt, bevorzugt mit Schwefelsäure (H₂SO₄).

Die akustisch dämpfende Zwischenschicht wird bevorzugt als Folie bereitgestellt, die in einem vorgelagerten Verfahrensschritt mittels Extrusion, bevorzugt mittels Coextrusion der inneren polymeren Schicht und der äußeren polymeren Schichten, hergestellt wird. Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Erfindung umfasst weiter die Verwendung einer erfindungsgemäßen Verbundscheibe in einem Fahrzeug, bevorzugt einem Kraftfahrzeug, besonders bevorzugt einem Personenkraftwagen, insbesondere als Windschutzscheibe, Seitenscheibe, Rückscheibe oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1: einen Querschnitt durch eine Ausgestaltung des erfindungsgemäßen Verbundglases,
- Figur 2: ein Flussdiagramm einer Ausführungsform des erfindungsgemäßen Verfahrens.

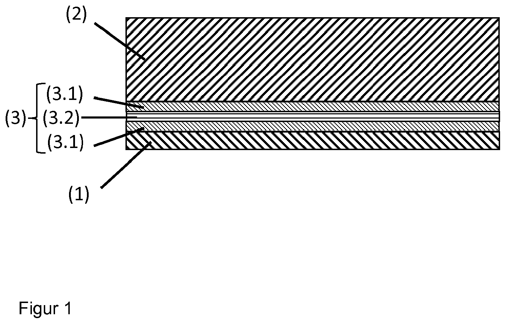

Figur 1 zeigt ein erfindungsgemäßes Verbundglas, welches aus einer Innenscheibe 1 und einer Außenscheibe 2 besteht, die über eine akustisch dämpfende Zwischenschicht 3 miteinander verbunden sind. Die akustisch dämpfende Zwischenschicht 3 ist aus einer inneren polymeren Schicht 3.2 und zwei äußeren polymeren Schichten 3.1 gebildet, wobei die äußeren polymeren Schichten 3.1 jeweils unmittelbar flächig an die Innenscheibe 1 oder Außenscheibe 2 grenzen und die innere polymere Schicht 3.2 zwischen den äußeren polymeren Schichten 3.1 liegt und unmittelbar flächig an diese grenzt. Die äußeren polymeren Schichten 3.1 sind jeweils aus PVB mit einer Dicke von 0,35 mm ausgebildet. Die innere polymere Schicht 3.2 besteht aus PVB mit einer Dicke von 0,15 mm. Die Elastizität der inneren polymeren Schicht 3.2 ist dabei höher als die Elastizität der äußeren polymeren Schichten 3.1. Die Innenscheibe 1 ist chemisch vorgespannt, während die Außenscheibe nicht vorgespannt ist. Das Verbundglas ist als Windschutzscheibe eines Kraftfahrzeugs vorgesehen. Das Verbundglas ist, wie für Kraftfahrzeug-Windschutzscheiben üblich, dreidimensional gekrümmt. Das bedeutet, dass die Scheibe eine Krümmung in mehreren Richtungen des Raumes aufweist, insbesondere in horizontaler und vertikaler Richtung. Der Einfachheit halber ist das Verbundglas in der Figur jedoch schematisch plan dargestellt.

Das erfindungsgemäße Verbundglas weist aufgrund der sehr geringen Glasstärken ein sehr geringes Gewicht auf. Dennoch zeichnet dieses sich durch eine hohe Bruchfestigkeit und Steinschlagfestigkeit aus. Das Verbundglas erfüllt insbesondere die hohen Sicherheitsanforderungen an Verbundgläser im Fahrzeugbereich, so dass es beispielsweise als Windschutzscheibe verwendet werden kann. Durch die zusätzliche Stabilisierung der Verbundscheibe mittels der akustisch dämpfenden Zwischenschicht ist es insbesondere möglich, eine extrem dünne Innenscheibe für Fahrzeugscheiben zu verwenden. Dieses Ergebnis war für den Fachmann unerwartet und überraschend.

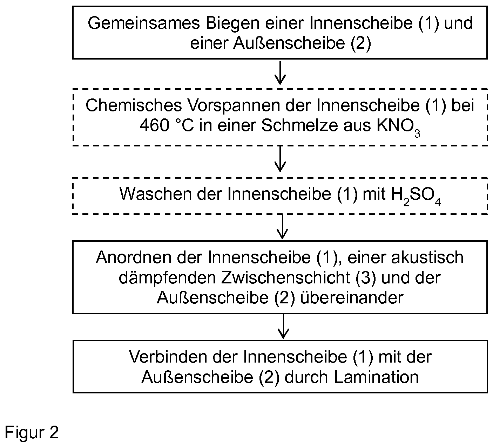

Figur 2 zeigt ein Flussdiagramm eines Ausführungsbeispiels des erfindungsgemäßen Verfahrens zur Herstellung eines erfindungsgemäßen Verbundglases. Eine Innenscheibe 1 und eine Außenscheibe 2 werden in einem planen Ausgangszustand bereitgestellt. Die Innenscheibe 1 und die Außenscheibe 2 werden zusammen einem Biegeprozess unterzogen und kongruent gebogen in ihre endgültige dreidimensionale Form.

Die Innenscheibe 1 wird nach dem Biegen chemisch vorgespannt. Die Innenscheibe 1 wird dazu nach dem Biegen langsam abgekühlt, um thermische Spannungen zu vermeiden. Eine geeignete Abkühlrate beträgt beispielsweise 0,1 °C/sec. Die Innenscheibe 1 wird anschließend für einen Zeitraum von einigen Stunden, beispielsweise 4 Stunden, bei einer Temperatur von 460 °C mit einer Schmelze aus Kaliumnitrat behandelt und dabei chemisch vorgespannt. Die Behandlung bewirkt einen diffusionsgetriebenen Austausch von Natriumionen durch größere Kaliumionen über die Oberflächen des Glases. Dadurch werden Oberflächendruckspannungen erzeugt. Die Innenscheibe 1 wird anschließend abgekühlt und dann mit Schwefelsäure gewaschen, um Rückstände des Kaliumnitrats zu entfernen.

Anschließend wird eine akustisch dämpfende Zwischenschicht 3 zwischen Innenscheibe 1 und Außenscheibe 2 angeordnet. Der Stapel aus Innenscheibe 1, Zwischenschicht 3 und Außenscheibe 2 wird auf herkömmliche Weise durch Lamination verbunden, beispielsweise durch ein Vakuumsackverfahren.

### Bezugszeichenliste:

- (1): Innenscheibe
- (2): Außenscheibe
- (3): akustisch dämpfende Zwischenschicht
- (3.1): äußere polymere Schicht niedrigerer Elastizität
- (3.2): innere polymere Schicht höherer Elastizität

## Patentansprüche

1. Fahrzeug-Verbundglas zur Abtrennung eines Fahrzeuginnenraums von einer äußeren Umgebung, mindestens umfassend:
- eine Innenscheibe (1) aus Glas mit einer Dicke von 0,2 mm bis 0,3 mm,
- eine Außenscheibe (2) aus Glas mit einer Dicke von 1,6 mm bis 2,1 mm, und
- eine akustisch dämpfende Zwischenschicht (3), welche die Innenscheibe (1) mit der Außenscheibe (2) verbindet,
wobei
- die akustisch dämpfende Zwischenschicht (3) mindestens zwei äußere polymere Schichten (3.1) und eine zwischen diesen liegende innere polymere Schicht (3.2) umfasst und die äußeren polymeren Schichten (3.1) eine niedrigere Elastizität oder Plastizität als die innere polymere Schicht (3.2) aufweisen,
- die innere polymere Schicht (3.2) eine Dicke von 0,05 mm bis 0,40 mm aufweist,
- die äußeren polymeren Schichten (3.1) eine Dicke von 0,20 mm bis 0,60 mm aufweisen und
- die Gesamtdicke der akustisch dämpfenden Zwischenschicht (3) mindestens 0,70 mm beträgt,
wobei die Außenscheibe (2) nicht vorgespannt ist und Kalk-Natron-Glas enthält, und
wobei die Innenscheibe (1) eine chemisch vorgespannte Scheibe ist und Aluminosilikatglas enthält.

2. Fahrzeug-Verbundglas nach Anspruch 1, wobei die äußeren polymeren Schichten (3.1) und die innere polymere Schicht (3.2) zumindest Polyvinylbutyral (PVB), Ethylenvinylacetat (EVA), Polyurethan (PU) oder Gemische oder Copolymere oder Derivate davon, bevorzugt Polyvinylbutyral (PVB), besonders bevorzugt Polyvinylbutyral (PVB) und Weichmacher, enthalten.

3. Fahrzeug-Verbundglas nach einem der Ansprüche 1 bis 2, wobei die innere polymere Schicht (3.1) eine Dicke von 0,07 mm bis 0,30 mm, bevorzugt von 0,10 mm bis 0,20 mm, aufweist.

4. Fahrzeug-Verbundglas nach einem der Ansprüche 1 bis 3, wobei die äußeren polymeren Schichten (3.1) eine Dicke von 0,30 mm bis 0,40 mm aufweisen.

5. Fahrzeug-Verbundglas nach einem der Ansprüche 1 bis 4, wobei die Innenscheibe (1) von 55 Gew-% bis 72 Gew-% Siliziumoxid (SiO₂), von 5 Gew-% bis 10 Gew-% Aluminiumoxid (Al₂O₃), von 10 Gew-% bis 15 Gew-% Natriumoxid (Na₂O), von 7 Gew-% bis 12 Gew-% Kaliumoxid (K₂O) und von 6 Gew-% bis 11 Gew-% Magnesiumoxid (MgO) enthält.

6. Verfahren zur Herstellung eines Fahrzeug-Verbundglases nach einem der Ansprüche 1 bis 5, wobei
(a) die Innenscheibe (1), die akustisch dämpfende Zwischenschicht (3) und die Außenscheibe (2) in dieser Reihenfolge flächenmäßig übereinander angeordnet werden und
(b) die Innenscheibe (1) und die Außenscheibe (2) durch Lamination miteinander verbunden werden.

7. Verwendung eines Fahrzeug-Verbundglases nach einem der Ansprüche 1 bis 5 in einem Kraftfahrzeug, bevorzugt einem Personenkraftwagen, insbesondere als Windschutzscheibe, Seitenscheibe, Rückscheibe oder Dachscheibe.

## Claims

1. Vehicular laminated glass for separating a vehicle interior from an external environment, at least comprising:
- an inner pane (1) made of glass with a thickness of 0.2 mm to 0.3 mm,
- an outer pane (2) made of glass with a thickness of 1.6 mm to 2.1 mm, and
- an acoustically damping intermediate layer (3), which bonds the inner pane (1) to the outer pane (2),
wherein
- the acoustically damping intermediate layer (3) comprises at least two outer polymeric layers (3.1) and an inner polymeric layer (3.2) positioned therebetween, and the outer polymeric layers (3.1) have lower elasticity or plasticity than the inner polymeric layer (3.2),
- the inner polymeric layer (3.2) has a thickness of 0.05 mm to 0.40 mm,
- the outer polymeric layers (3.1) have a thickness of 0.20 mm to 0.60 mm, and
- the total thickness of the acoustically damping intermediate layer (3) is at least 0.70 mm,
wherein the outer pane (2) is a non-prestressed pane and contains soda lime glass, and
wherein the inner pane (1) is a chemically tempered pane and contains aluminosilicate glass.

2. Vehicular laminated glass according to claim 1, wherein the outer polymeric layers (3.1) and the inner polymeric layer (3.2) contain at least polyvinyl butyral (PVB), ethylene vinyl acetate (EVA), polyurethane (PU), or mixtures or copolymers or derivatives thereof, preferably polyvinyl butyral (PVB), particularly preferably polyvinyl butyral (PVB) and plasticizers.

3. Vehicular laminated glass according to claim 1 or 2, wherein the inner polymeric layer (3.1) has a thickness of 0.07 mm to 0.30 mm, preferably of 0.10 mm to 0.20 mm.

4. Vehicular laminated glass according to one of claims 1 through 3, wherein the outer polymeric layers (3.1) have a thickness of 0.30 mm to 0.40 mm.

5. Vehicular laminated glass according to one of claims 1 through 4, wherein the inner pane (1) contains from 55 wt.-% to 72 wt.-% silicon oxide (SiO₂), from 5 wt.-% to 10 wt.-% aluminum oxide (Al₂O₃), from 10 wt.-% to 15 wt.-% sodium oxide (Na₂O), from 7 wt.-% to 12 wt.-% potassium oxide (K₂O), and from 6 wt.-% to 11 wt.-% magnesium oxide (MgO).

6. Method for producing a vehicular laminated glass according to one of claims 1 through 5, wherein
(a) the inner pane (1), the acoustically damping intermediate layer (3), and the outer pane (2) are arranged areally atop one another in this order, and
(b) the inner pane (1) and the outer pane (2) are bonded to one another by lamination.

7. Use of a vehicular laminated glass according to one of claims 1 through 5 in a motor vehicle, preferably a passenger car, in particular as a windshield, side window, rear window, or roof panel.

## Revendications

1. Verre feuilleté pour véhicules destiné à séparer l'intérieur d'un véhicule d'un environnement extérieur, comprenant au moins :
- une vitre intérieure (1) en verre d'une épaisseur de 0,2 mm à 0,3 mm,
- une vitre extérieure (2) en verre d'une épaisseur de 1,6 mm à 2,1 mm, et
- une couche intermédiaire d'amortissement acoustique (3), qui relie la vitre intérieure (1) à la vitre extérieure (2),
dans laquelle
- la couche intermédiaire d'amortissement acoustique (3) comprend au moins deux couches polymères externes (3.1) et une couche polymère interne (3.2) placée entre elles, et les couches polymères externes (3.1) ont une élasticité ou une plasticité plus faible que la couche polymère interne (3.2),
- la couche polymérique intérieure (3.2) a une épaisseur comprise entre 0,05 mm et 0,40 mm,
- les couches polymères externes (3.1) ont une épaisseur de 0,20 mm à 0,60 mm, et
- l'épaisseur totale de la couche intermédiaire d'amortissement acoustique (3) est d'au moins 0,70 mm,
dans lequel la vitre extérieure (2) est une vitre non précontrainte et contient du verre sodocalcique, et
dans lequel la vitre intérieure (1) est une vitre trempée chimiquement et contient du verre d'aluminosilicate.

2. Verre feuilleté pour véhicules selon la revendication 1, dans lequel les couches polymères extérieures (3.1) et intérieures (3.2) contiennent au moins du butyral de polyvinyle (PVB), de l'éthylène-acétate de vinyle (EVA), du polyuréthane (PU), ou des mélanges, des copolymères ou des dérivés de ceux-ci, de préférence du butyral de polyvinyle (PVB), de préférence encore du butyral de polyvinyle (PVB) et des plastifiants.

3. Verre feuilleté pour véhicules selon la revendication 1 ou 2, dans lequel la couche polymérique intérieure (3.1) a une épaisseur de 0,07 mm à 0,30 mm, de préférence de 0,10 mm à 0,20 mm.

4. Verre feuilleté pour véhicules selon l'une des revendications 1 à 3, dans lequel les couches polymères extérieures (3.1) ont une épaisseur de 0,30 mm à 0,40 mm.

5. Verre feuilleté pour véhicules selon l'une des revendications 1 à 4, dans lequel la vitre intérieure (1) contient de 55 % en poids à 72 % en poids d'oxyde de silicium (SiO₂), de 5 % en poids à 10 % en poids d'oxyde d'aluminium (Al₂O₃), de 10 % en poids à 15 % en poids d'oxyde de sodium (Na₂O), de 7 % en poids à 12 % en poids d'oxyde de potassium (K₂O), et de 6 % en poids à 11 % en poids d'oxyde de magnésium (MgO).

6. Procédé de fabrication d'un verre feuilleté pour véhicules selon l'une des revendications 1 à 5, dans lequel
(a) la vitre intérieure (1), la couche intermédiaire d'amortissement acoustique (3) et la vitre extérieure (2) sont disposées les unes au-dessus des autres dans cet ordre, et
(b) la vitre intérieure (1) et la vitre extérieure (2) sont liés l'un à l'autre par laminage.

7. Utilisation d'un verre feuilleté pour véhicules selon l'une des revendications 1 à 5 dans un véhicule automobile, de préférence une voiture de tourisme, en particulier comme parebrise, vitre latérale, vitre arrière ou vitre de toit.
